Europäisches Patentamt

European Patent Office

Office européen des brevets

(19)

(11) **EP 1 473 647 A1**

(12) **EUROPEAN PATENT APPLICATION**

(43) Date of publication:
**03.11.2004 Bulletin 2004/45**

(51) Int Cl.⁷: **G06F 17/60**

(21) Application number: **03009562.4**

(22) Date of filing: **28.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **DEUTSCHE BÖRSE AG**
**60487 Frankfurt am Main (DE)**

(72) Inventors:
• **Grzebeta, Sven**
**60487 Frankfurt am Main (DE)**

• **Sippel, Konrad**
**60487 Frankfurt am Main (DE)**

(74) Representative: **Grünecker, Kinkeldey,**
**Stockmair & Schwanhäusser Anwaltssozietät**
**Maximilianstrasse 58**
**80538 München (DE)**

Remarks:
Amended claims in accordance with Rule 86 (2) EPC.

(54) **Portfolio valuation system and method**

(57) A real-time financial market portfolio monitoring technique is provided where a data collection is continuously valued. The data collection comprises a first plurality of data items that are stored. Each data item of the first plurality has assigned a respective one of data items of a second plurality that are also stored. Each data item of the second plurality represents an individual data item value. One or more of at least two data sources are connected to receive input data. Stored data items of the second plurality are continuously updated based upon the received input data. A data collection value for the data collection is calculated based on data item values of the updated data items. The technique may be used to calculate net asset values of portfolios in real-time.

Fig.1

EP 1 473 647 A1

**Description**

The invention relates to data collection valuation techniques for use in financial market portfolio monitoring systems, and to corresponding apparatus, methods and systems.

**BACKGROUND OF THE INVENTION**

A portfolio is a bundle of financial instruments that may be described by a data collection. Any valuation of a portfolio needs to take values of the portfolio constituents into consideration, i.e., price information of the respective financial instruments. The valuation result may then be a net asset value price.

However, the net asset value is usually calculated (and published) at the end of every business day only. Thus, a net asset value of a portfolio does presently not reflect the most recent changes in the price information of the portfolio constituents that might occur during the business day since the net asset value is based on data that were valid at the close of the last business day. This is a disadvantage since financial business decisions may require up-to-date price information.

In particular with the arrival of exchange-traded portfolios and with an increasing demand for transparency in portfolio investment, demand has been identified for a technology which provides sophisticated and continuous monitoring of the net asset value of any given portfolio in the financial markets.

A basic net asset value calculation tool is described in WO 01/72106 A2. This prior art determines an intra-day net asset value proxy of an actively managed exchanged traded fund by applying prices received from a "feed" to security positions in the fund portfolio. While this technique allows for disseminating a net asset value proxy on a continual basis throughout a trading day, it still lacks flexibility in respect to where the prices to be applied are received from.

Moreover, there is a general demand to increase the calculation accuracy of the prior art systems.

**SUMMARY OF THE INVENTION**

It is the object of the invention to provide an improved financial market portfolio monitoring technique that is more flexible and provides higher accuracy than conventional techniques.

This object is solved by the invention as claimed in the independent claims.

Preferred embodiments are defined in the dependent claims.

In an embodiment, an apparatus for use in a real-time financial market portfolio monitoring system is provided for continuously valuing a data collection comprising a first plurality of data items. The apparatus comprises storage means for storing the first plurality of data items. The storage means further stores a second plurality of data items. Each data item of the first plurality has assigned a respective one of the data items of the second plurality. Each data item of the second plurality represents an individual data item value. The apparatus further comprises an interface module for establishing data connections to receive input data. Moreover, the apparatus comprises a processor for continuously updating data items of the second plurality stored in the storage means based upon the received input data, and calculating the data collection value for the data collection based on data item values of the updated data items. The apparatus further comprises a controller for controlling the interface module to connect to one or more of at least two data sources to receive the input data.

In another embodiment, a computer-implemented method is provided for monitoring a financial market portfolio in real-time, by continuously valuing a data collection comprising a first plurality of data items. In the method, the first plurality of data items and a second plurality of data items are stored. Each data item of the first plurality has assigned a respective one of the data items of the second plurality. Each data item of the second plurality represents an individual data item value. The method further comprises the step of connecting to one or more of at least two data sources to receive input data. Stored data items of the second plurality are continuously updated based upon the received input data. A data collection value for the data collection is calculated based on data item values of the updated data items.

In further embodiments, a corresponding financial market portfolio monitoring system and computer program product are provided.

**BRIEF DESCRIPTION OF THE DRAWINGS**

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:

FIG. 1 illustrates a computer system for use in a real-time financial market portfolio monitoring system according to an embodiment of the invention;

FIG. 2 is a flow-chart illustrating the process of changing a portfolio composition according to an embodiment;

FIG. 3 is a flow-chart illustrating the process of adjusting a portfolio for corporate actions according to an embodiment;

FIG. 4 is a flow-chart illustrating the process of calculating synthetic prices according to an embodiment;

FIG. 5 is a timing chart illustrating how ticks from two exchanges can be included in the calculation process according to an embodiment;

FIG. 6 is a flow-chart illustrating the price finding process according to an embodiment;

FIG. 7 is a flow-chart illustrating the price filtering process according to an embodiment;

FIG. 8 is a flow-chart illustrating the process of calculating a net asset value according to an embodiment;

FIG. 9 is a flow-chart illustrating the process of calculating the net asset value according to another embodiment;

FIG. 10 is a flow-chart illustrating the net asset value algorithm that may be applied in the process of FIG. 9;

FIG. 11 is a flow-chart illustrating how the quality of a net asset value tick can be assured according to an embodiment;

FIG. 12 is a flow-chart illustrating the process of outputting net asset values in multiple currencies according to an embodiment; and

FIG. 13 is a flow-chart illustrating the process of correcting a net asset value according to an embodiment.

## DETAILED DESCRIPTION OF THE INVENTION

The illustrative embodiments of the present invention will be described with reference to the figure drawings wherein like elements and structures are indicated by like reference numbers.

As will be apparent from the more detailed description of the various embodiments below, the present invention is directed to a technique for continuously valuing a data collection comprising a first plurality of data items, using second data items. The term "continuous" as used herein refers to any substantially ceaseless scheme, either periodic or aperiodic. A valuation is considered to be continuous if determined values can be repeatedly output in a manner that is perceived by the recipients as being substantially uninterrupted or being at a frequency sufficiently high for the recipients to take decisions on portfolio investments substantially in real-time.

In the following embodiments, the data collection may be a portfolio of securities, derivatives, or other instruments, identified by first data items. Valuing this portfolio may be done by continuously calculating a net asset value based on price information provided by the second data items.

According to the invention, price information is received from one or more of at least two data sources. This enables the real-time financial market portfolio monitoring system to be more flexible because it may select one or all of the data sources to obtain price information for the portfolio constituents. One further advantage of doing so is that the entire accuracy of the net asset value calculation is increased since the system can select the better one of multiple prices that are available from the various sources. If for instance a data source is known to be more reliable than another data source, more emphasis can be taken to data received from this source. Besides the most simple approach of selecting at any one time the best source, the system may also calculate a mean price for a given instrument based on data received from multiple sources, in order to eliminate errors by averaging out the received values. The averaging process may even make use of weighting factors that reflect the respective known or assumed data source quality.

In the embodiments, a computer system is provided for the continuous aggregation of the net asset value of portfolios in a sophisticated manner. The computer system provides the collection of asset prices from various sources in a definable manner, the manipulation, adaptation and checking of received prices, the aggregation of the assets and the dissemination of the aggregated net asset value for public or private use.

In particular, the embodiments can include the values of all kinds of asset classes: equities and other equity-like cash market products, bonds, futures contracts, traded options, cash in foreign currency, mark-to-market prices from the issuer or from a third-party source for non-listed instruments such as real estate, commodities, non-listed options and futures, and forward-rate agreements. Each asset can receive prices in its own currency. The aggregated net asset value will be in a defined currency, but the computer system can provide net asset values in several currencies for the same portfolio. The embodiments can switch between various definable data sources for each asset during the trading day. They can also accept prices from various sources in parallel. Further, the embodiments can process corporate actions and adjust asset prices for corporate actions by using so-called "synthetic prices".

The net asset value represents the value of a portfolio, based on a valuation of the various portfolio constituents involved. Each portfolio calculation may be different due to each portfolio's particular combination of equities, bonds or other asset classes. The value of each portfolio constituent may be calculated separately, and converted into the portfolio's respective base currency (e.g. Euro). The conversion may be based on received currency information, also denoted "unit information" hereinbelow. Further, any such conversion may be performed on the basis of real-time exchange rates (rate information). These individual portfolio components may then be added up and divided by the number of units issued by the fund (Net Asset Value per fund share in issue). If the portfolio is held by a single owner, the aggregated value of the portfolio components is the Net Asset Value.

The constituents of a portfolio may involve combinations of equities, derivatives, bonds and cash. In other embodiments, investments such as real estate ownership might also be included.

Incoming price information and processing for subsequent portfolio revaluations may both be conducted in real-time.

Portfolio composition data may be delivered by the respective issuer electronically, and may contain initial prices and exchange rates for each of the constituents involved. Where the computer system cannot provide a price or valuation for a specific constituent, the corresponding delivered price may be used instead (mark-to-market price).

A portfolio may contain an instrument that is not available in the current stream of price data. In this event, the missing price may be obtained from a data source: this may require activation or subscription to the respective corresponding service.

Further, the plausibility of the calculations may be checked through specific controls for each process involved.

The "operator" function, as defined herein, may comprise the computer system's users. This may cover operating in the technical sense, as well as the activities of a staff member of the department.

Whenever an error message occurs, or a message is sent to the operator (e.g. in the course of plausibility checks of incoming data), such messages may not only contain an error code but also (where appropriate) information supporting error analysis.

According to an embodiment of the present invention, the net asset value calculation is provided with multi-source and source switch capabilities. This may be a function of the computer system which allows the time or event-driven choice of one or more data sources as price sources for each asset in the portfolio. The price-finding algorithm is configurable per asset. The computer system of this embodiment may select the data source or data sources according to a pre-set time or event schedule, and at any given time it only accepts prices from the active source(s). The sources can overlap during a defined period of time, i.e. the computer system can be configured in such a way that prices from two or more sources are accepted and processed in the same period of time.

In another embodiment, the invention is capable of selecting and processing multiple price types. This may be an extension to the above computer system for which price types can be defined per data source. This function is preferably a switch which determines what types of prices are accepted per asset per source in each portfolio. Among the price types which might be delivered by a source may be one or more of the following quantities: traded price, bid quote, ask quote, mid point between bid and ask, block trades and other trade qualifiers.

Further, the invention may, in an embodiment, provide for foreign currencies conversion for prices from the price sources. In this embodiment, the computer system converts prices from any source into the base currency of the portfolio if the delivered price is in a different currency than the base currency of the portfolio. If a price is delivered in foreign currency the computer system may identify the corresponding foreign exchange data from a data feed and calculate (by means of multiplications or divisions) the price of the asset position by the current foreign exchange rate, thus converting the price into the portfolio's base currency. The exchange rate can also be entered manually by an operator if the required rate is exotic or not available on any feed, or if the issuer of the portfolio wishes a specific rate to be used.

Another embodiment allows for automatic foreign exchange rate updates. This is a function which updates the exchange rate applied to an asset position immediately when a new exchange rate is delivered for the currency of the asset. It is to be noted that this may be done even if the price of the asset position itself has not changed.

Yet another embodiment of the present invention automatically uses valuation prices for net asset value calculation. The system may use prices from connected "fair price" determination algorithms if no price is delivered from any of the configured data sources over a defined period of time (e.g. for 1 hour or 1 day). The fair price algorithms can be bond pricing systems, which determine fair bond prices for illiquid bonds, or derivatives pricing tools, which determine fair prices for derivatives such as futures or options by applying the Black-Scholes formula, or swap pricing tools. The computer system is designed in such a way that the fair price determination algorithms can either be connected to the computer system via a hardware interface or integrated in the computer system via defined price input connections.

Mark-to-market prices from external sources may be used in further embodiments. The system may use mark-to-market prices for asset items until a new price is delivered through any connected and active data source. Mark-to-market prices are prices determined by a computer system or an expert. A mark-to-market price is an attempt ("educated guess") at determining a fair price for an illiquid asset. In contrast to fair prices as described above, mark-to-market prices can have a subjective aspect whereas fair prices are determined electronically in an objective manner. The mark-to-market price can be delivered by the issuer in the configuration file, it can be delivered electronically through a separate interface by a third party, or it can be calculated manually by an expert and entered manually into the computer system.

In yet another embodiment, the invention provides for corporate actions processing and synthetic prices. The system may adjust an asset position in advance if a corporate action (such as a dividend payment, split, or rights issue) takes place. If the corporate action becomes valid on a given day t, the computer system adjusts the volume of the asset position in the portfolio according to defined rules (e.g. dependent on the corporate action type and the investment strategy of the portfolio) and the current price of the asset position before the real-time aggregation starts on that day t. The adjusted price (so-called "synthetic price") remains valid until a new price is delivered from any active data source connected to the computer system.

Moreover, the invention may be embodied to provide price filtering/quality assurance of prices from price sources. The system may compare financial data delivered through a connected source to a previous price, to a defined absolute price, or to any other constant or variable retrievable by the computer system. In still further embodiments, filtering/quality assurance of net asset values may be provided to, e.g., apply quality assurance mechanisms to the calculated net asset values before they are disseminated to the outside world by the computer system. The checks include comparisons of the calculated net asset values to e.g. the previous tick, the first tick on the current trading day, the closing tick from the previous trading day, an average of the previous n ticks etc. The data in question is only accepted if the comparison of the new data and the reference data fulfils a defined logical condition such as "is equal to", "is not equal to", "does not deviate by more than X%", or "does not deviate by more than X currency units". The maximum deviation $X$ can be configured per instrument per source with a switch of the computer system.

If an incoming price is not valid, it is rejected. The system can be configured in such a way that once an invalid price has been detected for an instrument, no prices will be accepted for this instrument until an operator has re-set the blockage of prices for the instrument. If a net asset value is not valid, this net asset value is either not disseminated at all or it is disseminated with a flag indicating that this net asset value is unconfirmed. This behaviour can be defined with a switch of the computer system.

In any case the computer system will indicate (e.g. via a screen, an output file or an optical indicator) to an operator that the net asset value is implausible and needs to be checked. If the operator confirms the current net asset values or confirms that an error has been rectified, the computer system may resume normal net asset value dissemination. With this functionality, quality checks and quality control are exerted on the incoming prices and on the outgoing Net Asset Values.

In addition, multi-currency capability for net asset value per portfolio may be provided in further embodiments. This may allow for the distribution of the net asset value for each portfolio in several currencies. The computer system may provide a mechanism which uses the same portfolio configuration and the same source prices and calculates the net asset value in one or more additional currencies on top of the portfolio's base currency. The target currencies can be defined through an interface to the computer system (e.g. file interface or keyboard).

Finally, embodiments exist that may provide for historical correction of net asset values. The system may detect price and parameter corrections and may automatically trigger the re-calculation of all historical net asset value ticks in whose calculation the corrected price was used. The computer system can receive a corrected price either from any of the connected price sources or from manual input by an operator. If the computer system receives a price correction for any historical price (i.e. a price that has been used for an asset previously) it detects all net asset value ticks which are based on the price that is to be corrected. The computer system then re-calculates all affected ticks, using the original parameters except for the corrected price. The re-calculation can also be triggered by a button of the computer system after any of the portfolio composition parameters (number of shares per assets, cash component etc.) has been adjusted with historic validity.

Turning now to a more detailed description of the above discussed embodiments of the present invention, the following will detail the processes that may be performed in the computer system of the invention, to change a portfolio composition, adjust the portfolio for corporate actions, create synthetic prices, calculate the net asset values, subscribe to price data feeds, perform corrections, and execute reporting and monitoring tasks etc.

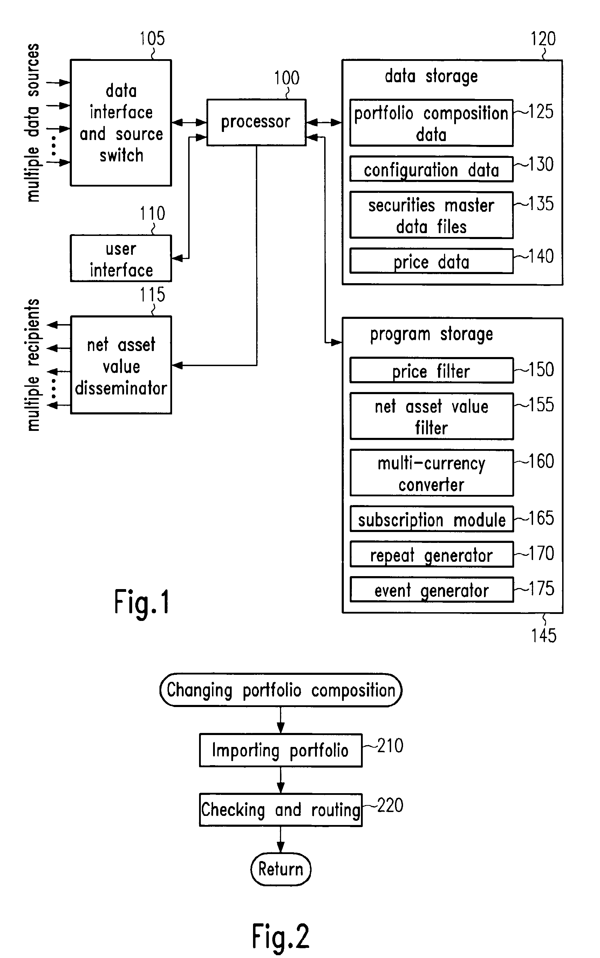

Referring now to the drawings, and in particular to FIG. 1 which illustrates a portfolio monitoring computer system according to an embodiment, there is provided a processor 100 that is connected to the remaining units of the system in order to interchange data. The system further comprises a data interface 105 that may be used to establish data connections to one or more of multiple data sources. Further, a user interface 110 is provided that may comprise a maintenance screen or other display means, as well as input devices like keyboards, touch screens, or pointer devices such as computer mice.

The processor is further connected to a data storage 120 and a program storage 145. Both storage units may be of any suitable type, including volatile and non-volatile memory devices and disk or tape drives of various types. As will be discussed in more detail below, the data storage stores portfolio composition data 125, configuration data 130, securities master data files 135, and price data 140. The program storage 145 stores computer-executable instructions to perform operations of a price filter 150, a net asset value filter 155, a multi-currency converter 160, a subscription module 165, a report generator 170, and/or an event generator 175. All of these functions will be discussed in more detail below.

Once the net asset value is calculated by processor 100 based on instructions stored in program storage 145 and based on data stored in data storage 120, the result is fed to the net asset value disseminator 115 which outputs the calculated value(s) to one or more of multiple recipients.

It is to be noted that other embodiments exist where some or all of the units shown in FIG. 1 may be grouped in a different manner, thereby leading to a different data flow. For instance, the net asset value disseminator 115, or any other unit in the system of FIG. 1, can be embodied to be a separate external unit having its own memory and processor. Thus, for instance the multi-currency conversion may in other embodiments be performed within the net asset value disseminator 115, rather than by processor 100 based on instructions 160.

The system of FIG. 1 or any modified system may be realized as single, stand-alone computer engine that has some networking capabilities. In other embodiments, the system may be a distributed system having its components working together by transmitting and receiving data over an interconnecting network so that the entire function is realized by proper interaction of all the components in the distributed network. The protocol of the various components may then for instance be a client/server protocol.

**Changing a Portfolio Composition**

In one embodiment, portfolio composition data 125 is delivered by the respective portfolio issuer to the computer system electronically (step 210 of FIG. 2). Upon receipt, the data may be immediately checked for completeness and syntactic accuracy (step 220). Moreover, verification may be needed as to whether the constituents are actually included in the relevant securities master data files 135. In case of incomplete or incorrect portfolios, a message may be sent to both the portfolio's issuer and the operator. In this case, the portfolio affected is not activated within the computer system. Instead, the portfolio previously transferred by the issuer (usually the day before) remains valid for net asset value calculation purposes. Otherwise, the new portfolio composition is entered into the repository, and forwarded to the core calculation process. An additional notification message may be sent to both the issuer and the operator.

When transmitting a portfolio, the issuer provides the relevant composition data. For the purpose of value calculation, the issuer may also optionally provide prices for each instrument involved (mark-to-market prices). In case of investments denominated in foreign currencies, the issuer will also indicate the respective exchange rate against the portfolio's base currency. These values are used within the computer system until a new price for that instrument is delivered by any of the defined data sources (e.g. in the event of exotic instruments). Moreover, the issuer may indicate the underlying price source(s), as well as the respective period of validity (e.g. 12:00 midnight - 04:00 p.m. German time, 04:00 p.m. - 12:00 midnight New York time, etc.).

Portfolio compositions may be changed during the day. In this case the computer system loads, checks and activates the new portfolio composition at a defined time during the day.

Each portfolio may be sent via an interface to the computer system that imports it automatically. Both the transmission path and the sent data may have to be safeguarded in an appropriate manner (e.g, by way of PGP file encryption, SSL connection, etc.). Where unknown components such as exotic equity instruments are reported, the computer system will support subscription to the corresponding data via a provider. This is further described below when discussing the subscription process to price data.

The portfolio composition data sent by the issuer (for instance on a daily basis) may also contain the ID of the respective portfolio as well as its individual components. The following net asset value data structure may be used for the complete description of a portfolio:

- Portfolio ISIN (International Securities Identification Number) or other unique identifier

- Number of portfolio shares in issue
- Validity
- Net asset value mnemonic
- Net asset value name
- Principal net asset value currency
- Net asset value calculation interval
- Net asset value ticks ISIN or other unique identifier
- Definition of components

The component definitions may include:

- Component names
- Number of investment components in portfolio
- Definition of instruments

The instrument definitions may include:

- Instrument ISIN (identification number) or other unique identifier
- Number of units of instrument in portfolio
- Mark-to-market price
- Definition of data sources

The data source definitions may include:

- Exchange name or identifier
- Source name or identifier
- Source of exchange rates
- Valid time intervals for each exchange
- Currency of price source
- Conversion rate for number of equities/number of contracts, e.g. in the case of ADRs/GDRs (American/Global Depositary Receipts) as alternative price source for a share

Corporate actions (such as dividend payments, interest payments, splits, issue of subscription rights) can in one embodiment either be processed by the issuer of the portfolio or by the computer system. If the issuer processes corporate actions the data in the file valid for a given day $t$ reflects all events which become valid as of this day $t$. If the computer system processes corporate actions the file may give the composition and the prices without any corporate actions event for day $t$. Instead, the computer system may apply any changes to the number of shares or the instrument prices when calculating the net asset value.

In their portfolio definitions, issuers may provide the actual portfolio composition as well as, on an optional basis, its initial valuation (mark-to-market prices). Such initial valuation allows the calculation of the net asset value without external price data, e.g. for real estate or non-listed instruments. In case there are portfolio positions for which no prices exist within the computer system, and no initial valuation has been delivered by the issuer, an alert message may be sent to the operator. A decision can then be made as to whether the portfolio as a whole should not be activated, or whether the valuation of these particular positions should be excluded from calculation.

A portfolio definition may also be modified internally, i.e. by the operator, via suitable maintenance screens.

The above described process of changing a portfolio composition may preferably be automated. For instance, it may be performed during night time, or intra-day.

**Adjusting a Portfolio for Corporate Actions**

Whenever a corporate action occurs in any instrument the portfolio may be needed to be adjusted accordingly. A corporate action with regard to portfolio valuation is a corporate event relating directly to the issued shares that results in a technical price change of the share, where the said price change is independent of market opinion. Examples of such corporate actions are dividend payments, bonus payments, bonus share issues, share splits, reverse splits, spin-offs of business areas, subscription rights on newly issued share and subscription rights on other instruments such as bonds, warrants or options.

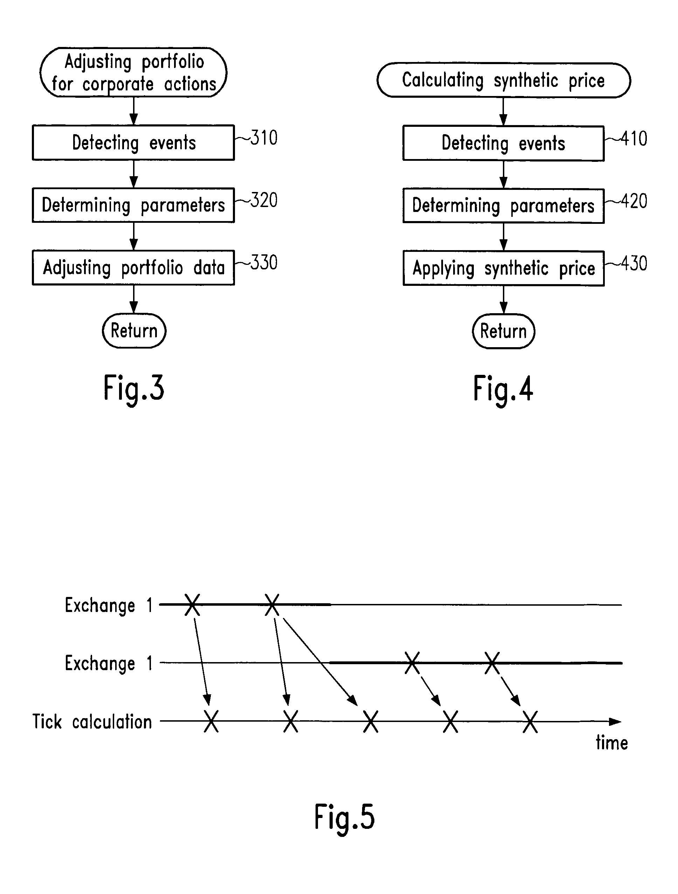

A process of adjusting a portfolio for corporate actions is depicted as embodiment in FIG. 3. First, events are detected in step 310 that indicate that a corporate action has taken place. Then, the necessary parameters are determined in step 320 in order to adjust the portfolio data in step 330.

The computer system of the present embodiment may offer a choice: either corporate actions are accounted for by the issuer or the computer system processes them automatically. This can be defined in the computer system by a switch per portfolio. If the computer system processes corporate actions the following processes may apply:

If a corporate action occurs for instrument $i$ on day $t$ the computer system may adjust the portfolio for day $t$. As of day $t$+1 it is assumed that the issuer has accounted for the corporate action and that it is reflected in the portfolio configuration that the issuer sends.

The computer system may identify upcoming corporate action events from a corporate actions source (provided by a third party through a data feed) in step 310.

Three types of corporate actions may be handled by the computer system of the present embodiment:

1) Dividends and similar payments
2) Splits, reverse splits and change in nominal capital per share
3) Ex subscription rights

If several corporate actions become effective on the same day they may be processed one after the other, preferably in the following order: First: splits, reverse splits and change in nominal capital per share. Second: ex subscription rights. Third: dividends and similar payments. As a different order might apply, a warning message may be generated via a screen attached to the computer system.

In all cases the computer system may react to corporate actions notifications for events that become effective on day $t$ at the end of business day $t$-1. Events may come from event generator 175, or may be received from an external event source via data interface 105.

1) Dividends and similar payments

There are two options in the computer system of the present embodiment for processing dividends and similar payments: Pay-outs can either be added to the cash position or they can be reinvested in the security for which the dividend or pay-out has been made. This can be set for each net asset value individually by means of a switch that the computer system provides.

a) Dividend to cash

The dividend sum $d_{it}$ may be multiplied by the number of shares of the instrument that paid the dividend $(q_{i,t})$. This product may then be added to the first cash position $v_{cash,1}$. If this position does not exist in the net asset value it may be created automatically by the computer system. On the next delivery of a configuration file by the issuer the adjusted position $v_{cash,1}$ may be replaced by the information from the issuer.

$$v_{cash1\ (new)} = v_{cash1\ (old)} + d_{i,t} * q_{i,t}$$

b) Dividend reinvested

The dividend sum $d_{i,t}$ may be multiplied by the number of shares of the instrument that paid the dividend $(q_{i,t})$. This product may then be divided by the current price of the instrument $(p_{i,t})$. The result $(qa_{i,t})$ may be added to the current number of shares of the instrument $(q_{i,t})$. On the next delivery of a configuration file by the issuer the adjusted $q_{i,t}$ may be replaced by the information from the issuer.

$$q_{i,t\ (new)} = q_{i,t\ (old)} + qa_{i,t} = q_{i,t\ (old)} + (d_{i,t} * q_{i,t})\ /p_{i,t}$$

2) Splits, reverse splits and change in nominal capital per share

From the information provided by the corporate actions source the computer system may derive the split ratio. Preferably, the split ratio $SP$ is always the number of shares after the event divided by the number of shares before the event.

$$SP = q_{i,t\ (after\ event)}\ /\ q_{i,t\ before\ event})$$

In the portfolio the number of shares $q_{i,t}$ for the instruments affected may be multiplied by the split ratio *SP*.

$$q_{i,t\ (new)} = q_{i,t\ (old)} * SP$$

On the next delivery of a configuration file by the issuer the adjusted $q_{i,t}$ may be replaced by the information from the issuer.

3) Ex subscription rights/ex other rights/ex spin-off

From the corporate action source the computer system may derive the ex ratio for the subscription rights (or any other instrument that goes "ex" from the original instrument) and the identifier (ISIN) of the subscription rights. The computer system may define the number of subscription rights that will come into the portfolio. This can be derived from the subscription ratio *SR*, which may be defined as number of rights per share owned:

$$SR = \text{number of rights received/1 Share}$$

In the portfolio a new share instrument position may be added by the computer system. The new instrument may be defined by the ISIN of the subscription rights (or any other rights). The instrument may be added with the following parameters:

$$q_{rights,t} = q_{i,t} * SR$$

$$currency_{rights} = currency_i$$

$$p_{rights,\ t} = \frac{p_{i,t} - p_{subsription} \pm \delta}{1 + SR}$$

where $\delta$ is the financial advantage or disadvantage of the new shares (the shares which can be bought through the subscription rights) compared to the shares already in the portfolio. If the rights are not subscription rights on a new share issue of the original instrument, the price of the rights may be entered into the computer system manually. In this case the computer system may assume $p_{rights,t} = 0$.

On the next delivery of a composition file by the issuer, the rights instrument may be either deleted or replaced by the parameters for this instrument as given in the composition file.

The above described process of adjusting a portfolio for corporate actions may preferably be automated. For instance, it may be performed after close of calculation of each business day.

**Calculating Synthetic Instrument Prices**

Whenever a corporate action event happens the price of the affected instrument should change.

An example process is depicted in the flow-chart of FIG. 4. A corporate action event is detected in step 410 that triggers the determination of the necessary parameters in step 420. The synthetic instrument price is then calculated in step 430.

Once a new price is delivered from a source on the ex-day (day *t*) market mechanisms ensure that the effect of the corporate action is reflected in the price of the instrument. However, sometimes some instruments might not receive a new price for a longer duration. To prevent errors in the net asset value calculation due to lack of new prices for instruments that go "ex a corporate event" the computer system uses so-called synthetic prices for an instrument after a corporate action has taken place. The processing of corporate actions is described above where the adjustment of portfolios for corporate actions is discussed.

Generally, synthetic prices are preferably valid until a new price is delivered from any valid prices source, until a new mark-to-market price is delivered by the issuer, or until a new synthetic price is generated due to another corporate action.

A synthetic price may be produced and applied whenever the computer system receives a corporate action notification from the corporate action source. The synthetic price may also be applied when the issuer processes corporate actions in the portfolio configuration file, as described above.

1) Dividends and similar payments

After dividend and similar payments, the value of the payment $d_{i,t}$ may be deducted from the last price:

$$p_{i,t\ (synthetic)} = p_{i,t\ (old)} - d_{it}$$

where $p_{i,t}$ *(synthetic)* is the new synthetic price and may be used as $p_{i,t}$ for instrument *i* on the start of calculation on day *t*, i.e., the day the dividend payment coupon has been detached from the share.

2) Splits, reverse splits and change in nominal capital per share

If a split, reverse split or a change in nominal capital occurs in any instrument the computer system may divide the last price of the instrument by the split factor *SP*:

$$p_{i,t\ (synthetic)} = p_{i,t\ (old)}\ /\ SP$$

3) Ex Subscription rights/ex other rights/ex spin-off

If a subscription or any right goes "ex" off the instrument, the computer system determines the synthetic price by deducting the value of the right from the last price:

$$p_{i,t\ (synthetic)} = p_{i,t(old)} - p_{rights,t}$$

where $p_{rights,t}$ is the value of the right that is detached from instrument *i* on day *t*. The determination of the value of a right may be apparent from the description above where the adjustment of portfolios for corporate actions is discussed.
The above described process of calculating synthetic instrument prices may preferably be automated. For instance, it may be performed after close of calculation of each business day.

**Price Finding**

For each asset in a portfolio, prices may be received in real-time from connected price sources. For each asset in a portfolio, price types can be configured in the computer system per price source. Different price types can be delivered from the price sources. Among the price types the computer system can handle, are trade prices, bid quotes, ask quotes, midpoint quotes, prices from specific trading times (e.g. opening, midday auction, closing etc.), (synthetic) fair prices, mark-to-market prices and all other price types identifiable from the price source.
The computer system preferably has a filter mechanism 150 that accepts only those price types for an asset through a specific source for which the computer system has been configured via a set of switches. If a price is delivered and the filter is not configured in such a way that the respective price type is to be accepted, then the price may be rejected and not used for calculation. Prices to be accepted or rejected by the computer system may include fair prices which are synthetically and objectively calculated by a separate process within the computer system or which are delivered from a connected price source. Besides, for illiquid assets the portfolio issuer or an operator of the computer system can provide so-called "mark-to-market prices", which are a subjective valuation of the asset. For each asset, the definition switches are set as in the following illustrative example:

| Source | Price Type | Filter behaviour |
|---|---|---|
| Exchange 1 | Last Trade | Accept price |
| Exchange 1 | Bid quote | Reject price |
| Exchange 1 | Ask quote | Accept price |
| Exchange 2 | Last Trade | Reject price |

(continued)

| Source | Price Type | Filter behaviour |
|---|---|---|
| Exchange 2 | Bid quote | Accept price |
| Exchange 2 | Ask quote | Accept price |
| Fair pricing source | Fair price Opening | Accept price |
| Fair pricing source | Fair price Midday | Reject price |

The filter may also provide a "conditional mode" function: for a specific asset in a specific portfolio the filter can be set in such a way that it accepts or rejects certain price types under certain conditions, e.g. fair prices may only be accepted if no other price has been delivered for a defined period of time.

In their portfolio definitions, issuers can identify more than one price source for the constituents involved. FIG. 5 illustrates which prices may be used to calculate the individual ticks. It is to be noted that after the changeover from price source "Exchange 1" to price source "Exchange 2", a price from Exchange 1 may be included in the calculation process until a new price from Exchange 2 is available.

Prices denominated in a foreign currency may require a conversion into the defined base currency of the portfolio. Such a conversion may always be performed on the basis of current prices and current exchange rates.

FIG. 5 shows an example where the second tick from Exchange 1 is still included in the calculation process for the third tick, even though at this point in time Exchange 2 happens to be the active source. However, since a price from Exchange 2 is not yet available, the most recently updated price (in this case the one provided by Exchange 1) is used instead. If any such price is denominated in a foreign currency, it is preferably converted accordingly.

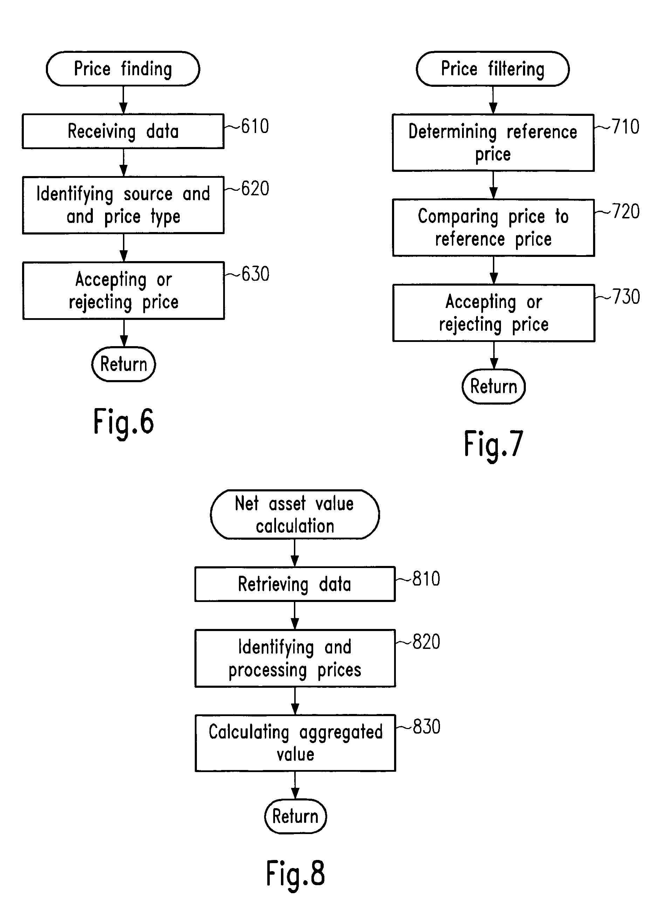

A flow-chart illustrating the price finding process according to an embodiment is depicted in FIG. 6. Once data is received in step 610, the system identifies the source and the price type in step 620 and decides in step 630 on whether the price is accepted or rejected.

Where trading hours of the valid price sources coincide, the respective most recently updated price (as determined by the time of price determination) may be used for tick calculation. Thus, the computer system can receive prices from several exchanges during a defined period. This is preferred in particular if an instrument is traded rarely and trading takes place across several exchanges.

In another embodiment the price finding may also form averages between the current prices from various sources, e.g. by forming an arithmetic average of the prices of at least two sources. This may be of particular importance if no single generally accepted price source is available for an instrument, e.g. instruments that are only traded over-the-counter (i.e. where no or few exchange prices are available) or illiquid instruments that receive prices only rarely. This averaging process can be configured via a set of switches. It can also be configured in such a way that the embodiment excludes certain prices from the averaging process, e.g. the highest and the lowest available price or prices that deviate by more than X% from the last price used in the net asset value calculation for that instrument.

To give an example for a specific bond, five broker sources are connected according to the present embodiment. The price finding switches are configured in such a way that bid prices from all five sources are accepted, with the highest and lowest prices being excluded.

At 10:30 the available prices in this example may be for instance as follows:

| Source | Price | Price Type | Time |
|---|---|---|---|
| Broker 1 | 102 | Bid | 10:00 |
| Broker 2 | 99.7 | Bid | 10:05 |
| Broker 3 | 100 | Bid | 10:29 |
| Broker 4 | 99 | Bid | 10:10 |
| Broker 5 | 99.5 | Bid | 09:50 |

The price received from Broker 1 and Broker 4 will be excluded as the highest and lowest, the resulting average would then be (99.7+100+99.5)/3 = 99.73. This average price would then be used in the embodiment for the net asset value calculation. The prices from connected sources can also be averaged by applying weighting factors to the prices from each source in order to reflect the quality of the prices from the respective source. In such a switch configuration with, for instance, two sources, prices of source 1 might have weight of 75% whereas prices from source 2 might only have a weight of 25% in the averaging. Other averaging methods such as the median may also be configured.

The above described price finding process may preferably be automated.

### Price Filtering

Each price accepted by the price type selector may be quality-checked by a price filter unit 150. This ensures that implausible or corrupt prices do not go 5 into the net asset value calculation. The price filter 150 may be a network of switches which subject the price to certain (configurable) rules. The basic function may be a comparison between the price to be checked and a so-called reference price (step 720 of FIG. 7). The reference price can be defined as e. g. the last price that has been delivered, the last price that has been accepted by o the price quality filter, the first price delivered on the current trading day, the last price delivered on the previous trading day, the average of the last ten prices that were delivered, etc (step 710). Among the rules that are applied in step 730 of FIG. 7, are conditions such as:

- reject the price if it deviates by more than a given percentage from the reference price;

- reject the price if it does not deviate by more than a given percentage from the reference price;

- reject the price if it deviates by more than a given amount in Euro (or any other currency unit) from the reference price.

The filter 150 may include an outbound interface that informs an operator of the price rejected on quality criteria. With an additional switch the filter 150 can be set to automatically stop accepting all new prices for the affected asset until the operator has re-set the filter 150 to normal condition again.

The above described prive filtering process may preferably be automated.

### Value Calculation

Current prices from defined price sources for the constituents of a portfolio may be used to calculate the corresponding value of the various asset classes contained. The values included in the calculation, such as prices and parameters, may be logged for each net asset value tick.

A first embodiment of the process of calculating the net asset value is depicted in FIG. 8. Price data is received in step 810, and the process then continues in step 820 with identifying and processing the prices of the various instruments that are constituents of the portfolio. Finally, the net asset value is calculated for instance by performing some aggregation in step 830.

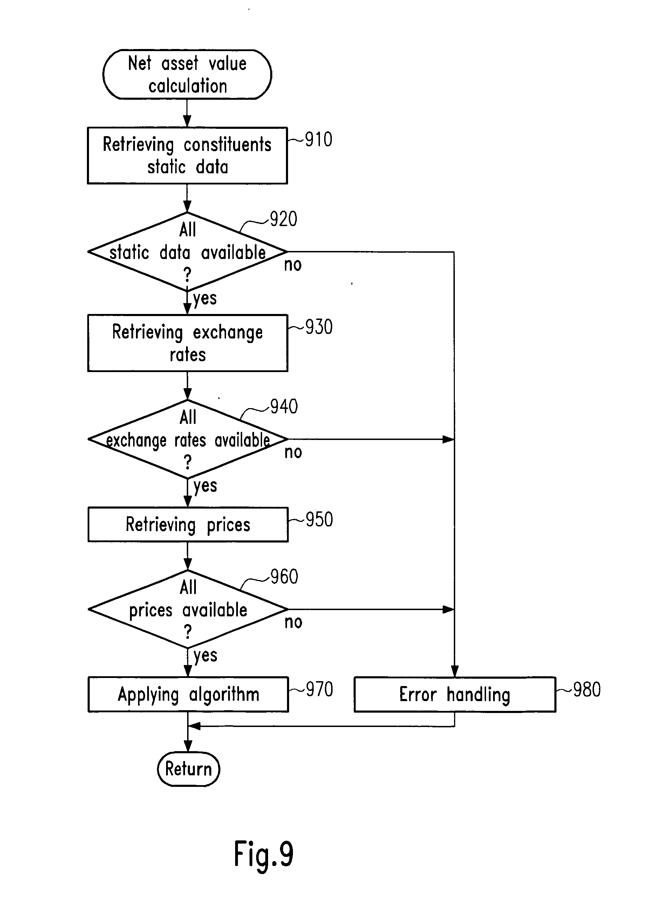

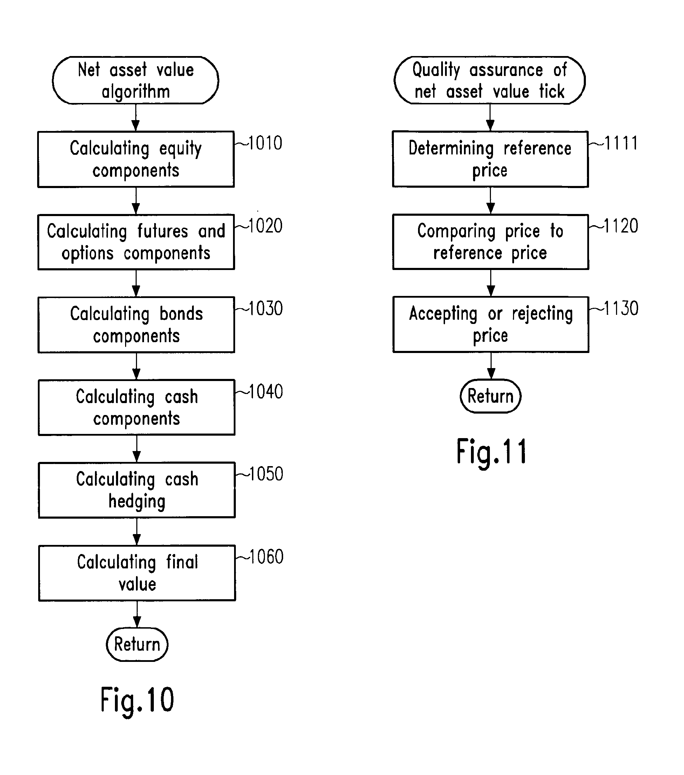

Another more detailed embodiment is depicted in FIGs. 9 and 10. Once static data is retrieved for each constituent in step 910, exchange rates are retrieved in step 930. Further, the various prices are obtained in step 930. If not all of the static data, exchange rates, and prices are available, the process determines in step 920, 940 or 960 that an error handling is to be performed in step 980, for instance by outputting an error message to the operator over user interface 110. If all of the required data is available, the net asset value algorithm depicted in FIG. 10 may be performed in step 970 of FIG. 9.

As apparent from this FIG. 10, a number of sub-calculations are performed in steps 1010 to 1050, for calculating equity components, future and option components, bonds components, cash components, and cash hedging. Finally, the net asset value is calculated in step 1060 based on the results of the various sub-calculations. This will be discussed in more detail below.

Net asset values may preferably be calculated as follows:

$$NAV_{tot,\tau} = \frac{\sum_{j=1}^{J} V_{j,\tau}}{N}$$

for instance:

$$NAV_{tot,\tau} = \frac{v_{share,\tau} + v_{futopt,\tau} + v_{bonds,\tau} + v_{cash,\tau} + v_{other,\tau} + \ldots + v_{J,\tau}}{N}$$

In these equations, $N$ is the total number of fund shares in issue, and $J$ denotes the number of portfolio components.

The sub-calculation for equities may be done as follows:

$$v_{share,\tau} = \sum_{i=1}^{I_s} p_{i,t,Bn} * e_{i,t,Bn} * A_a$$

where $p_{i,t,Bn}$ denotes the unit prices on exchange, $e_{i,t,Bn}$ is the exchange rate between portfolio's base currency and currency of underlying price, and $I_s$ is the number of different share holdings. The factor $A_0$ may be given by:

$$A_a = \sum_{i=1}^{I_s} q_{i,T} * C_{i,Bn}$$

where $q_{i,T}$ is the number of units of instrument / in the portfolio, and $C_{i,Bn}$ is an exchange conversion factor. The parameters $q_{i,T}$, $C_{i,Bn}$ and $I_s$ are preferably provided by the issuer.

The sub-calculation for derivatives (options and futures) may be performed using the following equation:

$$v_{futopt,\tau} = \sum_{i=1}^{I_o} p_{i,t,Bn} * e_{i,t,Bn} * A_o$$

where $p_{i,t,Bn}$ is the unit price on exchange, $e_{i,t,Bn}$ denotes the exchange rate, and $I_0$ is the number of different units. The factor $A_0$ may be given by:

$$A_o = \sum_{i=1}^{I_o} (q_{i,T} * CI_i * K_{i,Bn})$$

where $q_{i,T}$ is the number of portfolio units, $CI_i$ is a long/short factor (e.g. +1 or -1), and $K_{i,Bn}$ is a contract size. The contract size denotes a difference between various exchanges in the shareholding or the size of the right that the instrument represents, e.g. if prices for shares of a company are received from one source and prices for ADRs (American Depositary Receipts) or GDRs (Global Depositary Receipts) of that same company from another source and the ADR or GDR represents a multiple or a fraction of one share (e.g. 12 ADRs 5 represent one share).

The sub-calculation for bonds may be described as follows:

Case A: An accrued interest is calculated and delivered by the portfolio issuer in the configuration file (e.g. as a cash position)

$$v_{bonds,\tau} = \sum_{i=1}^{I_B} p_{i,t,Bn} * q_{i,T} * e_{i,t,Bn}$$

where $p_{i,t,Bn}$ is the bond price on exchange, $q_{i,T}$ is the number of portfolio units, $e_{i,t,Bn}$ is the exchange rate, and $I_B$ is the number of different units. This aggregation may also be employed if the bond price $p_{i,t,Bn}$ is a "dirty price", i.e. the price includes the bond price and the accrued interest for that bond. Bond prices are usually quoted in percent. Therefore, the quantity $q_{i,T}$ denotes the number of 100 currency units that the nominal value of the bond position comprises. Therefore, $q_{i,T}$ is the nominal amount of the bond position divided by 100. Depending on the customer's demands the configuration file can either contain $q_{i,T}$ as the quantity of the position per quoted price (e.g. per unit, per cent or per mil), or it can contain the nominal value and the embodiment may then automatically divide the nominal value by the appropriate value (e.g. 1 if the bond is quoted in units, 100 if the bond is quoted in per cent, 1000 if the bond is quoted in per mil).

Case B: An accrued interest is calculated in an embodiment according to the following equation

$$v_{bonds,\tau} = \sum_{i=1}^{I_B} p_{i,t,Bn} * q_{i,T} * e_{i,t,Bn} + r_{i,t,Bn} * e_{i,t,Bn}$$

where $p_{i,t,Bn}$ is the bond price on exchange, $q_{i,T}$ is the number of portfolio units, $e_{i,t,Bn}$ is the exchange rate, $I_B$ is the number of different units, and $r_{i,t,Bn}$ is the accrued interest. As to the conversion of the nominal value of the bond position into the quantity $q_{i,T}$, the same principles may apply as described above in Case A.

Finally, the sub-calculation for capital and other capital units, may be performed using the following equation:

$$v_{cash,\tau} = \sum_{i=1}^{I_A} e_{i,t,Bn} * v_{i,T}$$

where $e_{i,t,Bn}$ is the exchange rate, $I_A$ is the number of other capital units and cash holdings, and $v_{i,T}$ is a value of other capital units and cash holdings.

In the above equations, the following parameters may be used:

| | |
|---|---|
| N | Total number of portfolio components |
| $v_{i,t}$ | Value of asset class $i$ at time $t$ |
| J | Number of asset classes in the portfolio |
| $I_S$ | Number of positions in asset class equities |
| $I_O$ | Number of positions in asset class derivatives |
| $I_B$ | Number of positions in asset class bonds |
| $I_A$ | Number of positions in asset class of other instruments ("Other") |
| $p_{i,t,Bn}$ | Price of component $i$ at time $t$ on exchange $n$ |
| $q_{i,T}$ | Number of position units at time $T$ |
| $e_{i,t}$ | Exchange rate of the currency of position $i$ to the portfolio's base currency at time $t$ |
| $CI_i$ | Long/short indicator for contract $i$ |
| $C_{i,Bn}$ | Conversion factor for position $i$ on exchange $n$ |
| $K_{i,Bn}$ | Contract size of position $i$ on exchange $n$ |

The equities asset class may not only comprise equities, but also warrants, certificates, exchange-traded funds and other instruments traded on a cash market.

"Capital" and "Other" may form a joint asset class - as a rule, there may be no 5 real-time price data for positions in this class. Changes to these positions may generally occur only as a result of a new portfolio composition, or due to exchange rate fluctuations.

Accrued interest on bonds may either be included in the respective bond price itself (i.e. delivered with it), or in a position within "Other". Alternatively, upon request of the issuer, accrued interests can also be calculated by the computer system. Where an unknown position (e.g. exotic bond) is delivered by the issuer, there may be a choice of either excluding this position from the valuation process, or to calculate it on the basis of its initial valuation as delivered by the issuer. If no initial valuation is available for this position (for instance, there is an indicator that the valuation of a bond must be performed by the computer system itself), it cannot be included in the net asset value calculation process. In this event, the operator may be notified by a corresponding message.

Net asset value calculation may start immediately from the outset of the calculation period, and may be independent upon any special opening conditions. If, for individual constituents, there are no prices available within the computer system, the mark-to-market price as delivered by the issuer may be used instead.

"Initial" also may refer to the first calculation prompted by any intraday portfolio changes. During this process, checks may be carried out regarding the availability of prices for individual constituents. If available, calculation of the net asset value may be based on such prices, rather than on price data delivered by the issuer.

The calculated ticks may be transmitted to the defined output channel.

A net asset value calculation may also be operated in test mode, where ticks are calculated but not forwarded to the defined output channel. For the purpose of transmitting these ticks (calculated, but not distributed) to a certain recipient (such as the issuer), they can be extracted from the repository and sent out as a 5 file. This may be carried out manually.

The above described value calculation process may preferably be automated. For instance, the timing of net asset value may be adjustable per portfolio. In another embodiment, it may take place every 15 seconds. A time offset can be set for the tick calculation, e.g. at second 3, 18, 33, 48.

**Quality Assurance of Net Asset Value Tick**

After a net asset value tick has been calculated, it may be subject to a quality control. This prevents implausible or corrupt net asset values from dissemination. Similar to the price filter 150 above, a net asset value filter 155 may be provided that is a network of switches which subject the net asset value to certain (configurable) rules. The basic function is a comparison (step 1120 of FIG. 11) between the net asset value to be checked and a so-called reference net asset value. The reference net asset value can be defined in step 1110 as e.g. the last net asset value that has been calculated, the last net asset value that has been accepted by the net asset value quality check, the first net asset value calculated on the current trading day, the last net asset value calculated on the previous trading day, the average of the last ten net asset values that were disseminated, etc. Among the rules that are applied in step 1130, are conditions such as:

- reject the net asset value if it deviates by more than a given percentage from the reference net asset value;

- reject the net asset value if it does not deviate by more than a given percentage from the reference net asset value;

- reject the net asset value if it deviates by more than a given amount in Euro (or any other currency unit) from the reference net asset value.

The filter 155 may include an outbound interface that informs an operator of the net asset value rejected on quality criteria. With an additional switch the filter can be set to automatically disseminating ticks for the affected net asset value until the operator has re-set the filter 155 to normal condition again.

The above described quality assurance process may preferably be automated.

**Multi-Currency Output of the Net Asset Value**

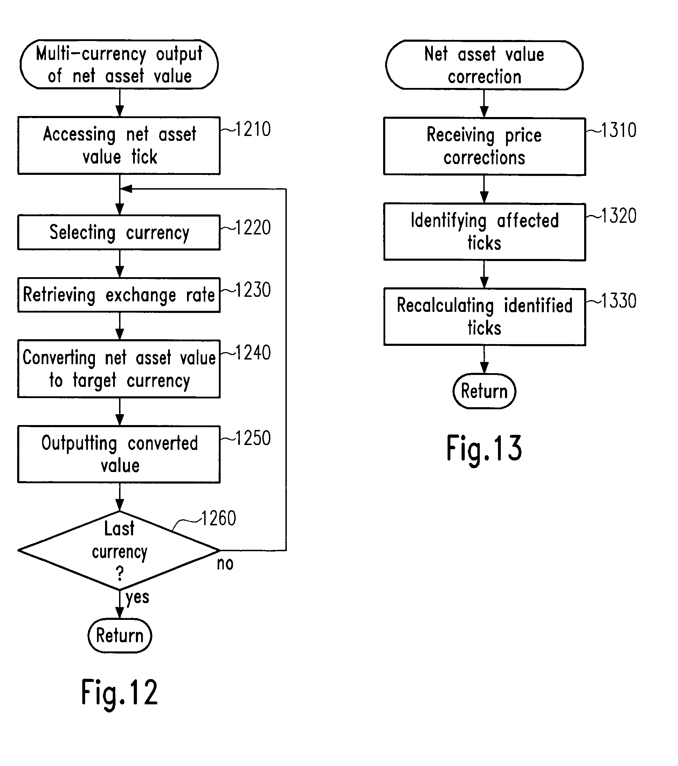

Each net asset value may be in a specified currency (or "unit"), i.e. the base currency of the net asset value. As many funds have different classes in various currencies (but based on the same portfolio composition) each net asset value can preferably be distributed in one or more additional currencies by the computer system. To that purpose a currency converter 160 reads the net asset value ticks (step 1210 of FIG.12) after they have been calculated and converts the tick in the additional currencies based on the real-time exchange rate between the base currency and the target currency (step 1240). Alternatively the computer system can be designed in such a way that for each portfolio several base currencies are defined. In this case the computer system applies the appropriate exchange rate to the incoming prices before the tick is calculated.

The base currency and the additional currencies for net asset value output may be defined by the issuer in the portfolio configuration file. The computer system reads this information from the file and configures the multi-currency converter automatically.

The above described multi-currency output process may preferably be automated. For instance, after having accessed the net asset value tick in step 1210, the process may perform an iteration by selecting one currency after another (steps 1220 and 1260), converting the net asset value to the respective target currency in step 1240, and outputting the converted value in step 1250. Further, the currency conversion may take exchange rates (i.e., currency conversion factors) into consideration which have been retrieved in step 1230.

In one embodiment, the system is configured to provide the calculated net asset value to each recipient in a respective currency assigned to that recipient. In another embodiment, individual recipients may have multiple currencies assigned so that they will receive the calculated value in multiple currencies.

**Performing Corrections**

Whenever price corrections are received, the computer system may ensure that subsequent calculations are based on those corrections (where applicable).

An example of the corrections process is depicted in the flow-chart of FIG. 13. Once price corrections are received in step 1310, the system identifies the affected ticks in step 1320 and recalculates the identified ticks in step 1330.

Where price corrections affect already-calculated and already-distributed ticks, a message may be generated. The decision whether all values should be recalculated and re-distributed in the event of any difference may either be made by the operator, or may have been specified in the respective portfolio definition.

A correction calculation may follow the same equations and processes as a normal tick calculation. It may be distributed with a correction flag and a "valid for" time stamp of the original tick that is being corrected by this new tick.

While the decision regarding a transmission may be made manually, the above described calculation process may preferably be automated, for instance upon receipt of a corrected tick that would affect already-calculated ticks.

**Subscribing to Price Data**

If there is no price data available within the computer system for a certain portfolio constituent, there may be the need to be subscribed to a data vendor via a provider. The computer system may comprise a subscription module 165 to support the subscription of real-time price deliveries from any data vendor in an automated fashion.

This may preferably be done upon receipt of, or upon request for, an instrument or a price feed that is not already on the computer system.

**Reporting**

The following reports can be generated by report generator 170 during the net asset value process for portfolios: composition reports and portfolio changes reports.

Composition reports show the composition of a portfolio, together with current prices and exchange rates available for calculation.

Portfolio changes reports show the change history of a portfolio's composition, i.e. at what time portfolio compositions were sent by the issuer, and at what time a composition was changed manually by the operator. The extent to which historical data is available in this report depends on how long the relevant data is kept in the computer system.

Reporting may preferably be done upon request.

**Monitoring**

For instance each day, at a certain time, the computer system may check whether a new portfolio definition has been submitted by the issuer.

Where no portfolio has been received by this time (i.e. no delivery for the current day), an alert message displaying the portfolios still missing may be issued.

This monitoring process may preferably be automated, for instance on a daily schedule.

While the invention has been described with respect to the physical embodiments constructed in accordance therewith, it will be apparent to those skilled in the art that various modifications, variations and improvements of the present invention may be made in the light of the above teachings and within the purview of the appended claims. For instance, the various techniques described for each of the above embodiments may be combined to be used selectively or even simultaneously. Moreover, while a number of flow-charts have been provided showing a specific sequence of process steps, it is to be noted that some or all of the depicted steps may be performed in a different 5 order, or even simultaneously. In further embodiments, some of the steps may even be dropped or replaced with other steps performing similar operations.

It is further to be noted that whenever the term switch is used herein, this term may denote a hardware switch as well as a software switch. Software switches may for instance be some selection means presented to the user on a screen of a graphical user interface.

In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

**Claims**

1. An apparatus for use in a real-time financial market portfolio monitoring system, for continuously valuing a data collection comprising a first plurality of data items, the apparatus comprising:

    storage means (120, 125, 140) for storing the first plurality of data items, said storage means further storing a second plurality of data items, each data item of the first plurality having assigned a respective one of the data items of the second plurality, each data item of the second plurality representing an individual data item value;

    an interface module (105) for establishing data connections to receive input data; and

    a processor (100, 145) for continuously updating data items of the second plurality stored in said storage means based upon the received input data, and calculating a data collection value for the data collection based on data item values of the updated data items;

    wherein the apparatus further comprises:

    a controller (100, 145) for controlling said interface module to connect to one or more of at least two data sources to receive said input data.

2. The apparatus of claim 1, wherein said data collection represents a portfolio of financial instruments, each data item of the first plurality comprises an identifier identifying at least one of said financial instruments, and the individual data item values represented by the data items of the second plurality indicate prices of the respective financial instruments.

3. The apparatus of claim 1 or 2, wherein said controller is adapted to control said interface module to change said data connections based on a time-driven schedule.

4. The apparatus of one of claims 1 to 3, wherein said controller is adapted to receive an input control signal to control said interface module to change said data connections in an event-driven manner based on said input control signal.

5. The apparatus of one of claims 1 to 4, wherein said processor is capable of continuously updating a data item of the second plurality based upon input data received substantially simultaneously from two or more data sources.

6. The apparatus of claim 5, wherein said processor is further arranged to perform a calculation algorithm upon input data received from said two or more data sources.

7. The apparatus of one of claims 1 to 6, wherein each data item value represented by one of the data items of the second plurality is of one of at least two data item types, and said storage means further stores a third plurality of data items, each data item of the second plurality having assigned a respective one of the data items of the third plurality, each data item of the third plurality identifying the data item type relating to the data item value represented by the corresponding data item of the second plurality.

8. The apparatus of claim 7, wherein said processor is capable of calculating said data collection value based on data item values of different types.

9. The apparatus of one of claims 1 to 8, wherein said input data comprises value information and unit information, and said processor is capable of converting values of different units into corresponding values of a predefined unit by applying appropriate conversion factors, before calculating said data collection value.

10. The apparatus of one of claims 1 to 9, wherein said input data comprises value information, and said processor is capable of determining unit information for the received value information dependent on the respective data source or sources where said input data is received from, and converting values of different units into corresponding values of a predefined unit by applying appropriate conversion factors, before calculating said data collection value.

11. The apparatus of claim 9 or 10, wherein said input data further comprises rate information indicating said conversion factors.

12. The apparatus of claim 11, wherein said interface module is capable of establishing different data connections to receive said value information and said rate information.

13. The apparatus of claim 11 or 12, wherein said processor is arranged to update said data items of the second plurality based upon received rate information even if no value information is received, and recalculate said data collection value based on data item values of the updated data items.

14. The apparatus of one of claims 1 to 13, wherein said processor is adapted to calculate said data collection value also based on at least one estimation value obtained by applying a predefined value determination algorithm, in case a data item value is not available.

15. The apparatus of claim 14, wherein said predefined value determination algorithm comprises an implementation of the Balck-Scholes formula.

16. The apparatus of one of claims 1 to 15, wherein said processor is adapted to calculate said data collection value also based on at least one estimation value in case a data item value is not available, said estimation value being obtained from either a configuration file stored in said storage means or from received input data.

17. The apparatus of one of claims 1 to 16, wherein said storage means further stores amount data indicating an individual amount assigned to each of said data items of the first plurality.

18. The apparatus of claim 17, wherein said processor is adapted to adjust the amount data of at least one data item in response to a corporate action.

19. The apparatus of claim 18, wherein said processor is adapted to determine a synthetic value of at least one data item of the second plurality by adjusting existing data item values in case of a corporate action, and calculate said data collection value also based on said synthetic value.

20. The apparatus of one of claims 1 to 19, wherein said processor is adapted to apply a filter algorithm on the received input data before updating the data items of the second plurality, said filter algorithm being configured to enable said processor to block input data that would, after having updated data items of the second plurality, lead to data item values significantly deviating from respective previous data item values, or from predefined reference values.

21. The apparatus of one of claims 1 to 20, wherein said processor is adapted to apply a filter algorithm on calculated data collection values, said filter algorithm being configured to enable said processor to block a calculated data collection value that significantly deviates from a previous data collection value, or from a predefined reference value.

22. The apparatus of claim 21, further comprising:

an output module for outputting calculated data collection values to one or more recipients,

wherein said processor is adapted to inhibit a blocked data collection value from being output.

**23.** The apparatus of claim 21 or 22, further comprising:

an output module for outputting calculated data collection values to one or more recipients,

wherein said processor is adapted to control said output module to output a blocked data collection value together with a flag indicating that the output data collection value is unconfirmed.

**24.** The apparatus of one of claims 21 to 23, further comprising:

a user interface module connected to receive user input data indicative of instructions to change the blocking behaviour and/or adjust deviation limits of said filter algorithm.

**25.** The apparatus of one of claims 1 to 24, further comprising:

an output module for outputting calculated data collection values to one or more recipients,

wherein said processor is adapted to convert calculated data collection values by applying appropriate unit conversion factors, before controlling said output module to output the values.

**26.** The apparatus of claim 25, wherein said processor is configured to apply multiple unit conversion factors for different currencies to calculate multiple data collection values for individual recipients.

**27.** The apparatus of claim 25 or 26, wherein said input data comprises rate information enabling said processor to determine said unit conversion factors.

**28.** The apparatus of one of claims 25 to 27, further comprising:

a user interface module connected to receive user input data indicative of instructions to change at least one of said unit conversion factors.

**29.** The apparatus of one of claims 1 to 28, wherein said processor is adapted to recalculate previously calculated data collection values based on correction data indicating at least one corrected data item value of the second plurality.

**30.** The apparatus of claim 29, wherein said correction data is comprised in said input data.

**31.** The apparatus of claim 29 or 30, further comprising:

a user interface module connected to receive user input data indicative of said correction data.

**32.** A computer-implemented method for monitoring a financial market portfolio in real-time, by continuously valuing a data collection comprising a first plurality of data items, the method comprising the steps of:

storing the first plurality of data items and a second plurality of data items, each data item of the first plurality having assigned a respective one of the data items of the second plurality, each data item of the second plurality representing an individual data item value;

connecting to one or more of at least two data sources to receive input data;

continuously updating stored data items of the second plurality based upon the received input data; and

calculating a data collection value for the data collection based on data item values of the updated data items.

**33.** The method of claim 32, adapted to operate the apparatus of one of claims 1 to 31.

**34.** A computer program product comprising at least one storage medium having instructions stored thereon which, when executed, perform the method of claim 32 or 33.

**35.** A financial market portfolio monitoring system comprising the apparatus of one of claims 1 to 31.

**Amended claims in accordance with Rule 86(2) EPC for the following Contracting State(s)**

**33.** The method of claim 32, comprising steps to operate the apparatus of one of claims 1 to 31.

Fig.1

data interface and source switch — 105

multiple data sources

processor — 100

data storage — 120

portfolio composition data — 125

configuration data — 130

securities master data files — 135

price data — 140

user interface — 110

net asset value disseminator — 115

multiple recipients

program storage

price filter — 150

net asset value filter — 155

multi-currency converter — 160

subscription module — 165

repeat generator — 170

event generator — 175

145

Fig.2

Changing portfolio composition

Importing portfolio — 210

Checking and routing — 220

Return

Fig.3

Fig.4

Fig.5

Price finding

Receiving data ~610

Identifying source and
and price type ~620

Accepting or
rejecting price ~630

Return

Fig.6

Price filtering

Determining reference
price ~710

Comparing price to
reference price ~720

Accepting or
rejecting price ~730

Return

Fig.7

Net asset value
calculation

Retrieving data ~810

Identifying and
processing prices ~820

Calculating aggregated
value ~830

Return

Fig.8

Net asset value
calculation

↓

Retrieving constituents
static data ⌐910

↓

All
static data available ⌐920
? ——no——→

↓yes

Retrieving exchange
rates ⌐930

↓

All
exchange rates available ⌐940
? ——no——→

↓yes

Retrieving prices ⌐950

↓

All
prices available ⌐960
? ——no——→

↓yes

Applying algorithm ⌐970        Error handling ⌐980

↓

Return

# Fig.9

Net asset value
algorithm

Calculating equity
components ~1010

Calculating futures and
options components ~1020

Calculating bonds
components ~1030

Calculating cash
components ~1040

Calculating cash
hedging ~1050

Calculating final
value ~1060

Return

Fig.10

Quality assurance of
net asset value tick

Determining reference
price ~1111

Comparing price to
reference price ~1120

Accepting or rejecting
price ~1130

Return

Fig.11

Multi-currency output
of net asset value

Accessing net asset
value tick ——1210

Selecting currency ——1220

Retrieving exchange rate ——1230

Converting net asset value
to target currency ——1240

Outputting converted
value ——1250

Last
currency
? ——1260

no

yes

Return

Fig.12

Net asset value
correction

Receiving price
corrections ——1310

Identifying affected
ticks ——1320

Recalculating identified
ticks ——1330

Return

Fig.13

EP 1 473 647 A1

<table>
<tr><td colspan="2"><strong>European Patent Office</strong></td><td><strong>EUROPEAN SEARCH REPORT</strong></td><td>Application Number<br>EP 03 00 9562</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 55930 A (ADVANTAGEDATA COM) 2 August 2001 (2001-08-02) * page 3, line 15 - line 28 * * page 5, line 13 - page 10, line 10 * --- | 1-35 | G06F17/60 |
| X | WO 96 18963 A (FS HOLDINGS INC) 20 June 1996 (1996-06-20) * page 2, line 19 - page 14, line 18; figure 1 * --- | 1-35 | |
| X | WO 01 72106 A (AMERICAN STOCK EXCHANGE LLC ;GASTINEAU GARY L (US); WEBER CLIFFORD) 4 October 2001 (2001-10-04) * page 2, paragraph 4 - page 4, paragraph 2; claim 20; figure 1 * --- | 1-35 | |
| X | US 5 983 203 A (CHURCH BRIAN E  ET AL) 9 November 1999 (1999-11-09) * abstract; figure 1 * --- | 1-35 | |
| A | YEATES, D:  "Systems Analysis and Design" 1994 , PRENTICE HALL , GREAT BRITAIN XP002252180 ISBN: 0-273-600-66-4 * page 265 - page 278 * ----- | 1-35 | TECHNICAL FIELDS SEARCHED (Int.Cl.7) G06F |

The present search report has been drawn up for all claims

| Place of search | Date of completion of the search | Examiner |
|---|---|---|
| MUNICH | 22 August 2003 | Beatty, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

27

## ANNEX TO THE EUROPEAN SEARCH REPORT
## ON EUROPEAN PATENT APPLICATION NO.

EP 03 00 9562

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2003

| Patent document cited in search report | | Publication date | Patent family member(s) | | Publication date |
|---|---|---|---|---|---|
| WO 0155930 | A | 02-08-2001 | AU | 3649801 A | 07-08-2001 |
| | | | WO | 0155930 A2 | 02-08-2001 |
| WO 9618963 | A | 20-06-1996 | AU | 4373196 A | 03-07-1996 |
| | | | EP | 0806017 A1 | 12-11-1997 |
| | | | WO | 9618963 A1 | 20-06-1996 |
| | | | US | 5893079 A | 06-04-1999 |
| WO 0172106 | A | 04-10-2001 | AU | 4776801 A | 08-10-2001 |
| | | | BR | 0109768 A | 29-04-2003 |
| | | | CA | 2404034 A1 | 04-10-2001 |
| | | | EP | 1278450 A1 | 29-01-2003 |
| | | | WO | 0172106 A2 | 04-10-2001 |
| US 5983203 | A | 09-11-1999 | AU | 5810298 A | 07-08-1998 |
| | | | WO | 9832069 A1 | 23-07-1998 |

EPO FORM P0459